# EUROPÄISCHE PATENTANMELDUNG

(11) **EP 4 375 774 A1**
(43) Veröffentlichungstag der Anmeldung: **29.05.2024**
(21) Anmeldenummer: 22209858.4
(22) Anmeldetag: 28.11.2022
(51) Int. Cl.: G05B 19/4069

(54) **VERFAHREN UND VORRICHTUNG ZUR ERMITTLUNG VON PROZESSPARAMETERN**

(71) Anmelder: Siemens Aktiengesellschaft, 80333 München (DE)
(72) Erfinder: Schuh, Carsten, 85598 Baldham (DE); Soller, Thomas, 94469 Deggendorf (DE)
(74) Vertreter: Siemens Patent Attorneys

(57) **Zusammenfassung**

Es wird ein Verfahren zur Ermittlung von Prozessparametern (P4, P5) einer Prozessvorrichtung (10) angegeben, bei dem die Prozessvorrichtung (10) für einen automatisierten Bearbeitungsprozess an einem Bauteil (30) ausgelegt ist, bei welchem wenigstens ein Prozessmedium (50) eingesetzt wird. Das Verfahren umfasst die folgenden Schritte:
a) Festlegen eines Bauteil-Parametersatzes (P3) für das zu bearbeitende Bauteil (30),
b) Festlegen eines Bearbeitungs-Parametersatzes (P4) für den durchzuführenden Bearbeitungsprozess,
c) Bereitstellen eines Simulationsmodells (M) für den Bearbeitungsprozess, welches wenigstens eine Kenngröße (K) des Bearbeitungsprozesses in Abhängigkeit von dem Bauteil-Parametersatz (P3), dem Bearbeitungs-Parametersatz (P4) und einem variablen Medien-Parametersatz (P5) für das einzusetzende Prozessmedium (50) beschreibt,
d) Festlegen eines bei dem Bearbeitungsprozess einzuhaltenden Grenzwerts (K_lim) für eine ausgewählte Kenngröße (K),
e) Simulation des Bearbeitungsprozesses unter Verwendung des Simulationsmodells (M) in mehreren Teilschritten eᵢ) und
f) Einstellung des optimierten Medien-Parametersatzes (P5_opt) für die Durchführung des automatisierten Bearbeitungsprozesses in der Prozessvorrichtung (10).

Hierbei werden bei den einzelnen Teilschritten eᵢ) jeweils unterschiedliche Medien-Parametersätze (P5) gewählt, wodurch insgesamt ein optimierter Medien-Parametersatz (P5_opt) ermittelt wird, bei welchem der Grenzwert (K_lim) für die ausgewählte Kenngröße (K) eingehalten wird. Weiterhin wird ein entsprechendes Bearbeitungsverfahren sowie ein Computerprogrammprodukt und eine Vorrichtung, welche zur Ausführung des jeweiligen Verfahrens ausgelegt sind, angegeben.

## Beschreibung

Die vorliegende Erfindung betrifft ein Verfahren zur Ermittlung von Prozessparametern einer Prozessvorrichtung, wobei die Prozessvorrichtung für einen automatisierten Bearbeitungsprozess an einem Bauteil ausgelegt ist, bei welchem wenigstens ein Prozessmedium eingesetzt wird. Weiterhin betrifft die Erfindung ein Verfahren zur Bearbeitung eines Bauteils in einer solchen Prozessvorrichtung sowie ein Computerprogrammprodukt und eine Vorrichtung zur Ausführung des Verfahrens.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

Bei vielen aus dem Stand der Technik bekannten Prozessvorrichtungen werden Prozessmedien eingesetzt, beispielsweise flüssige oder gasförmige Medien, welche entweder beim Prozess im Zuge einer chemischen Reaktion aufgebraucht werden oder aber den Prozess als Hilfsmedien unterstützen. Solche Prozessmedien werden z.B. in industriellen Fertigungsprozessen zum Kühlen, Schmieren, Inertisieren, Reinigen oder Transportieren, als Prozessreagenzien sowie für mögliche Kombinationen hiervon eingesetzt. Eine Aufbereitung und Wiederverwertung dieser Prozessmedien nach ihrem bestimmungsgemäßen Einsatz ist oftmals technisch nicht möglich oder zumindest nicht wirtschaftlich, so dass sie im Weiteren als Prozessabfall entsorgt werden. Darüber hinaus werden sie oftmals in übermäßiger Menge und/oder ungeachtet von tatsächlichen Prozesserfordernissen oder Prozessstillstandzeiten eingesetzt. Beide Aspekte sind unter Nachhaltigkeitsgesichtspunkten nicht vorteilhaft.

Bekannte Prozessvorrichtungen in der industriellen Fertigung werden typischerweise so gesteuert, dass primär eine bestmögliche Prozessrobustheit unter den gegebenen Randbedingungen erzielt wird. Dabei wird die Menge eines verwendeten Prozessmediums meist unabhängig von den Parametern des individuellen Bauteils so eingestellt, dass das Prozessziel sicher erreicht wird und die sonstigen Randbedingungen des jeweiligen Prozessschritts sicher eingehalten werden. So wird beispielsweise die Menge eines (flüssigen oder gasförmigen) Kühlmittels so gewählt, dass eine Überhitzung des zu bearbeitenden Bauteils mit hoher Sicherheit vermieden wird. Oder es wird beispielsweise die Menge einer Reinigungsflüssigkeit so gewählt, dass eventuell vorliegende Verunreinigungen mit hoher Sicherheit entfernt werden. Bei dieser Herangehensweise bleiben die individuellen Parameter des jeweils zu prozessierenden Bauteils häufig unberücksichtigt. Vielmehr wird die Menge des eingesetzten Prozessmediums vor allem von den in der Prozessvorrichtung eingestellten Bearbeitungsparametern bestimmt, wobei Erfahrungswerte mit den Bearbeitungsparametern benutzt werden, um die nötige Dosierung abzuschätzen. Diese Herangehensweise führt häufig zu hohen Mengen an eingesetztem Prozessmedium. Der entsprechend hohe Materialverbrauch kann sich zum einen nachteilig auf die Wirtschaftlichkeit des Bearbeitungsprozesses auswirken. Weitere Nachteile können aber auch dadurch gegeben sein, dass die hohen Medien-Mengen zu entsprechend hohen Umweltbelastungen (z.B. bei der Herstellung und/oder der Entsorgung des Prozessmediums) oder auch zu Gesundheitsbelastungen des mit der Prozessvorrichtung arbeitenden Personals führen können.

Aufgabe der Erfindung ist es daher, ein Verfahren zur Einstellung von Prozessparametern in einer Prozessvorrichtung anzugeben, welches die genannten Nachteile überwindet. Insbesondere soll ein Verfahren zur Verfügung gestellt werden, welches einen vergleichsweise ressourcenschonenden Einsatz des Prozessmediums ermöglicht. Eine weitere Aufgabe ist es, ein entsprechendes Bearbeitungsverfahren anzugeben sowie ein Computerprogrammprodukt und eine Vorrichtung, welche zur Ausführung des jeweiligen Verfahrens ausgelegt sind.

Diese Aufgaben werden durch das in Anspruch 1 beschriebene Verfahren zur Einstellung von Prozessparametern, das in Anspruch 11 beschriebene Bearbeitungsverfahren, das in Anspruch 14 beschriebene Computerprogrammprodukt sowie die in Anspruch 15 beschriebene Vorrichtung gelöst.

Das erfindungsgemäße Verfahren ist insbesondere ein computergestütztes Verfahren und dient zur Ermittlung von Prozessparametern für eine Prozessvorrichtung. Diese Prozessvorrichtung ist für einen automatisierten Bearbeitungsprozess an einem Bauteil ausgelegt, wobei bei dem Prozess wenigstens ein Prozessmedium eingesetzt wird. Das Verfahren umfasst die folgenden Schritte:
a) Festlegen eines Bauteil-Parametersatzes für das zu bearbeitende Bauteil,
b) Festlegen eines Bearbeitungs-Parametersatzes für den durchzuführenden Bearbeitungsprozess,
c) Bereitstellen eines Simulationsmodells für den Bearbeitungsprozess, welches ein oder mehrere Kenngrößen des Bearbeitungsprozesses in Abhängigkeit von dem Bauteil-Parametersatz, dem Bearbeitungs-Parametersatz und einem variablen Medien-Parametersatz für das einzusetzende Prozessmedium beschreibt,
d) Festlegen eines bei dem Bearbeitungsprozess einzuhaltenden Grenzwerts für eine ausgewählte Kenngröße,
e) Simulation des Bearbeitungsprozesses unter Verwendung des Simulationsmodells in mehreren Teilschritten eᵢ),
   - wobei bei den einzelnen Teilschritten eᵢ) jeweils unterschiedliche Medien-Parametersätze gewählt werden,
   - wodurch insgesamt ein optimierter Medien-Parametersatz ermittelt wird, bei welchem der Grenzwert für die ausgewählte Kenngröße eingehalten wird,
f) Einstellung des optimierten Medien-Parametersatzes für die Durchführung des automatisierten Bearbeitungsprozesses in der Prozessvorrichtung.

Dabei können die Schritte a) bis e) in einer Simulationsvorrichtung durchgeführt werden, die entweder Teil der genannten Prozessvorrichtung sein kann oder auch aus dieser ausgelagert sein kann. Die Reihenfolge, insbesondere der Schritte a) bis d), muss dabei nicht der angegebenen Reihenfolge entsprechen, sondern kann grundsätzlich beliebig sein. Zweckmäßig wird der Schritt e) jedoch im Anschluss an die vier Schritte a) bis d) durchgeführt, da in den Schritten a) bis d) die für die Simulation wesentlichen festen Parameter und Randbedingungen festgelegt werden.

So werden in Schritt a) die bauteilspezifischen Parameter festgelegt. Grundsätzlich kann die Prozessvorrichtung zur Bearbeitung verschiedener Bauteile eingesetzt werden, welche sich beispielsweise in der geometrischen Form, der Größe und/oder der Materialzusammensetzung unterscheiden können. In Schritt b) werden die Parameter des Bearbeitungsprozesses festgelegt, insbesondere der Bearbeitungsablauf und/oder die Parameter eines in der Prozessvorrichtung eingesetzten Werkzeugs. In der Prozessvorrichtung können unterschiedliche Bearbeitungsprozesse ausgeführt werden, welche sich beispielsweise bezüglich des eingesetzten Werkzeugs (z.B. Fräs-, Bohr-, Schneid-, Schweiß- oder Reinigungswerkzeug), des zu erreichenden Ergebnisses (z.B. zu erreichende Form, Abtragungsgrad, usw., was durch einen Werkzeugpfad eingestellt wird) oder sonstiger Prozessparameter wie z.B. bezüglich der Prozesstemperatur unterscheiden. Mit anderen Worten werden hier Parameter des Prozesses festgelegt, welche nicht primär mit dem Prozessmedium zusammenhängen und welche daher während der Durchführung eines Simulationszyklus in Schritt e) konstant gehalten werden. Bei der Prozessvorrichtung kann es sich allgemein um eine industrielle Fertigungsvorrichtung handeln.

In Schritt c) wird das für die eigentliche Simulation zu verwendende Simulationsmodell bereitgestellt, durch welche ein oder mehrere Kenngrößen abhängig von den festgelegten Parametern vorhergesagt werden.

In Schritt d) wird als Randbedingung für die Simulation wenigstens ein einzuhaltender Grenzwert für wenigstens eine ausgewählte Kenngröße definiert. Vorteilhaft können hier auch mehrere Grenzwerte für mehrere zugehörige Kenngrößen definiert werden, da typischerweise eine Vielzahl vordefinierter Randbedingungen beim Prozess einzuhalten ist. Die wenigstens eine Kenngröße ist insbesondere eine Größe, welche durch den Einsatz des Prozessmediums wesentlich beeinflusst wird, so dass die jeweils zu wählende Menge des Prozessmediums von dem hier festgelegten Grenzwert entscheidend abhängt. Beispielsweise kann es sich bei der ausgewählten Kenngröße um ein Maß für eine Beanspruchung des Bauteils handeln, für welche hier zweckmäßig ein einzuhaltender Maximalwert festgelegt wird. Alternativ kann es sich aber auch z.B. um ein Maß für eine Verunreinigung des Bauteils handeln, für welche ebenfalls ein Maximalwert vorgegeben werden kann. Ein solches Verunreinigungs-Limit kann beispielsweise als Obergrenze für eine Konzentration, eine Stoffmenge oder für einen Bedeckungsgrad einer unerwünschten Materialkomponente definiert sein.

Nachdem in den Schritten a) bis d) die wesentlichen EingangsDaten für die Simulation bereitgestellt worden sind, wird in Schritt e) die eigentliche Simulation durchgeführt. Diese wird in mehreren Teilschritten eᵢ) ausgeführt, wobei in den einzelnen Teilschritten eᵢ) unterschiedliche Medien-Parametersätze gewählt werden. Zumindest ein wesentlicher Medien-Parameter sollte hier also von Schritt zu Schritt variiert werden, beispielsweise eine eingesetzte Medien-Menge und/oder eine chemische Zusammensetzung des Prozessmediums. In jedem Teilschritt wird ein berechneter Wert für die ausgewählte Kenngröße erhalten, und dieser berechnete Wert wird mit dem wenigstens einen einzuhaltenden Grenzwert verglichen. Die Abfolge der Teilschritte kann insbesondere iterativ sein. Dies ist jedoch nicht zwingend erforderlich, und es kann alternativ auch eine parallele Ausführung einzelner Teilschritte erfolgen. Insgesamt wird so in jedem Fall ein Medien-Parametersatz bestimmt, bei welchem der Grenzwert für die ausgewählte Kenngröße gerade eben eingehalten wird. Insbesondere kann für eine gegebene Zusammensetzung auf diese Weise eine minimal nötige Medien-Menge bestimmt werden. Alternativ oder zusätzlich kann auch die Zusammensetzung des Prozessmediums im Hinblick auf ein vordefiniertes Optimierungskriterium (z.B. niedrige Prozesskosten, niedrigste benötigte Gesamtmenge, gute Umweltverträglichkeit und/oder geringe Gesundheitsbelastung) optimiert werden. Insgesamt wird so in Schritt e) ein auf die Bauteil- und Bearbeitungs-Parameter abgestimmter optimierter Medien-Parametersatz durch Simulation ermittelt, welcher im anschließenden Schritt f) für die Durchführung des Bearbeitungsprozesses als Prozessparameter eingestellt wird. Insbesondere kann in diesem Schritt f) der optimierte Medien-Parametersatz an eine innerhalb der Prozessvorrichtung vorhandene Steuereinrichtung weitergegeben werden und dort als Prozessparameter eingestellt werden.

Insgesamt wird durch das beschriebene Verfahren erreicht, dass mit Hilfe einer dem eigentlichen Bearbeitungsprozess vorgelagerten computergestützten Simulation ein optimierter Medien-Parametersatz gefunden wird, welcher insbesondere auf eine möglichst niedrige Medien-Menge und/oder niedrige Umweltbelastung oder niedrige Gesundheitsgefährdung optimiert ist. Wesentlich ist, dass diese Optimierung bauteilspezifisch ist, d.h. dass die Optimierung nicht nur in Abhängigkeit von den sonstigen Bearbeitungsparametern, sondern auch von den Bauteil-Parametern abhängt, also z.B. von Größe, Form und/ oder dem Material des individuellen zu bearbeitenden Bauteils. Durch diese individuelle Berücksichtigung der Bauteileigenschaften in der vorgelagerten Simulation kann eine besonders präzise Optimierung des eingesetzten Prozessmediums erfolgen. Insgesamt kann durch diese bauteilspezifische Optimierung ein besonders ressourcenschonender und nachhaltiger Bearbeitungsprozess umgesetzt werden.

Das erfindungsgemäße Verfahren zur Bearbeitung eines Bauteils in einer automatisierten Prozessvorrichtung umfasst die bereits beschriebenen Schritte a) bis f) und anschließend den folgenden Schritt:
g) Bearbeitung des Bauteils unter Verwendung des optimierten Medien-Parametersatzes.

Die Vorteile ergeben sich analog zum oben beschriebenen Verfahren zur Parametereinstellung mit dem Unterschied, dass der optimierte Medien-Parametersatz nicht nur bestimmt und für den Prozess eingestellt wird, sondern dass der Bearbeitungsprozess auch tatsächlich mit diesem Parametersatz durchgeführt wird.

Das erfindungsgemäße Computerprogrammprodukt umfasst Befehle, wobei die Befehle bei der Ausführung des Computerprogrammprodukts auf einem Computer diesen dazu veranlassen, das erfindungsgemäße Verfahren auszuführen.

Die erfindungsgemäße Vorrichtung umfasst eine Simulationsvorrichtung und eine Prozessvorrichtung. Die Prozessvorrichtung ist für einen automatisierten Bearbeitungsprozess an einem Bauteil ausgelegt, bei welchem wenigstens ein Prozessmedium eingesetzt wird. Die Simulationsvorrichtung ist zur Ausführung der folgenden Schritte ausgelegt:
a) Festlegen eines Bauteil-Parametersatzes für das zu bearbeitende Bauteil,
b) Festlegen eines Bearbeitungs-Parametersatzes für den durchzuführenden Bearbeitungsprozess,
c) Bereitstellen eines Simulationsmodells für den Bearbeitungsprozess, welches ein oder mehrere Kenngrößen in Abhängigkeit von dem Bauteil-Parametersatz, dem Bearbeitungs-Parametersatz und einem variablen Medien-Parametersatz für das einzusetzende Prozessmedium beschreibt,
d) Festlegen eines bei dem Bearbeitungsprozess einzuhaltenden Grenzwerts für eine ausgewählte Kenngröße,
e) Simulation des Bearbeitungsprozesses unter Verwendung des Simulationsmodells in mehreren Teilschritten eᵢ),
   - wobei bei den einzelnen Teilschritten eᵢ) jeweils unterschiedliche Medien-Parametersätze gewählt werden,
   - wodurch insgesamt ein optimierter Medien-Parametersatz ermittelt wird, bei welchem der Grenzwert für die ausgewählte Kenngröße eingehalten wird,
   Dabei weist die Prozessvorrichtung eine Steuervorrichtung auf, welche zur Ausführung des folgenden Schritts ausgelegt ist:
   f) Einstellung des optimierten Medien-Parametersatzes für die Durchführung des automatisierten Bearbeitungsprozesses in der Prozessvorrichtung.

Die Vorteile des erfindungsgemäßen Computerprogrammprodukts und der erfindungsgemäßen Vorrichtung ergeben sich analog zu den oben beschriebenen Vorteilen des erfindungsgemäßen Verfahrens.

Vorteilhafte Ausgestaltungen und Weiterbildungen der Erfindung gehen aus den von den Ansprüchen 1 und 11 abhängigen Ansprüchen sowie der folgenden Beschreibung hervor. Dabei können die beschriebenen Ausgestaltungen des Verfahrens zur Parametereinstellung, des Bearbeitungsverfahrens, des Computerprogrammprodukts und der Vorrichtung allgemein vorteilhaft miteinander kombiniert werden.

So kann das Prozessmedium allgemein vorteilhaft ein Kühlmittel, ein Schmiermittel, ein Inertisierungsmittel, ein Prozessgas, eine Prozessflüssigkeit, ein Reinigungsmittel und/oder ein Transportmittel sein. All diesen Prozess-Medien und -Hilfsstoffen ist gemeinsam, dass einerseits eine bestimmte Mindestmenge des Prozessmediums zur Verfügung stehen muss, damit der Bearbeitungsprozess robust abläuft, dass aber andererseits aus Gründen der Wirtschaftlichkeit und/oder Nachhaltigkeit ein Überschuss des eingesetzten Prozessmediums vermieden werden sollte. Beispielsweise kann das Prozessmedium ein Prozessfluid sein, also entweder flüssig oder gasförmig sein. Solche fluiden Medien kommen in vielen industriellen Fertigungsprozessen entweder als Hilfsstoffe oder auch als Reagenzien zum Einsatz, und ein ressourcenschonender Einsatz ist hier allgemein wünschenswert. Alternativ kann es sich bei dem Prozessmedium aber auch um einen Feststoff handeln (beispielsweise um ein Pulver zum abrasiven Strahlen) oder um eine Suspension eines Feststoffs in einer Flüssigkeit oder um ein Aerosol. Wesentlich ist nur, dass das Prozessmedien eine den Bearbeitungsprozess unterstützende Funktion erfüllt. Allgemein kann das Medium beim Prozess entweder ganz oder teilweise aufgebraucht werden (also z.B. chemisch reagieren), oder es kann danach unverändert vorliegen. Das nach dem Prozess verbleibende Medium kann entweder als Abfallprodukt entsorgt werden oder es kann ganz oder teilweise rückgewonnen werden. Gemäß einiger konkreter Ausführungsformen kann das Prozessmedium beispielsweise ein Kühlschmiermittel für einen Bearbeitungsprozess in einer Werkzeugmaschine sein oder aber es kann ein Inertgas in einem Schweißprozess sein oder es kann eine Reinigungsflüssigkeit in einem Reinigungsschritt sein. Dieser Reinigungsschritt kann optional einem weiteren Bearbeitungsschritt innerhalb eines Gesamtbearbeitungsprozesses vor- oder nachgelagert sein. Alternativ kann es sich um ein Reaktionsgas (z.B. zur Härtung eines Bauteils), um eine Prozessflüssigkeit oder ein Prozessgas zur Aufbringung einer Beschichtung, um eine Flüssigkeit oder ein Gas für einen Ätzprozess oder einen Ausgangsstoff für eine Plasmabehandlung eines Bauteils handeln. Ein weiteres Beispiel ist ein festes Prozessmedium für eine mechanische Behandlung, beispielsweise festes Kohlendioxid für einen CO₂-Strahl-Prozess oder ein Pulver für einen abrasiven Pulverstrahlprozess.

Allgemein vorteilhaft kann es sich bei dem Simulationsmodell um ein multiphysikalisches Simulationsmodell handeln, bei welchem Phänomene aus mehreren physikalischen Domänen berücksichtigt werden. So können beispielsweise neben Effekten der strukturellen Mechanik auch thermische, fluiddynamische, chemische und/oder elektrische Zusammenhänge in dem Modell berücksichtigt sein. Durch ein solches multiphysikalisches Modell wird bewirkt, dass bei der Simulation die Zusammenhänge zwischen den mechanischen Vorgängen des Bearbeitungsprozesses an dem Bauteil und den fluiddynamischen, thermischen, chemischen und/oder elektrischen Wechselwirkungen zwischen dem Prozessmedium und dem Bauteil und der Prozessvorrichtung ausreichend berücksichtigt werden. Mit anderen Worten handelt es sich um ein gekoppeltes Simulationsmodell, welches zumindest die strukturell-mechanische Domäne und zusätzlich wenigstens einen weiteren physikalischen Aspekt der Wechselwirkung des Prozessmediums mit dem Bauteil und/oder der Bearbeitungsvorrichtung beschreibt. Die Simulation in Schritt e) beruht dann auf der Verwendung dieses Modells, und sie wird insbesondere computergestützt durchgeführt. Dabei können vorteilhaft numerische Methoden zur Lösung von gekoppelten Differentialgleichungssystemen (mit oder ohne zusätzliche Verwendung von algebraische Gleichungen) aus diesen verschiedenen physikalischen Domänen zum Einsatz kommen. Besonders vorteilhaft kann es sich dabei um Diskretisierungsmethoden handeln, beispielsweise um die Finite-Elemente-Methode, die Finite-Differenzen-Methode oder die Finite-Volumen-Methode.

Gemäß einer ersten vorteilhaften Ausführungsform für den Schritt e) kann der hier bestimmte optimierte Medien-Parametersatz eine optimierte Gesamt-Medien-Menge als Parameter aufweisen, wobei die optimierte Gesamt-Medien-Menge als die minimale Medien-Menge bestimmt wird, bei welcher der festgelegte Grenzwert für die ausgewählte Kenngröße eingehalten wird. Diese Optimierung der Gesamt-Medien-Menge wird insbesondere durch Erhöhung oder Verringerung in den einzelnen Teilschritten erreicht, wobei die chemische Zusammensetzung des Prozessmediums zunächst konstant gehalten wird. Somit wird eine minimal nötige Gesamt-Medien-Menge für eine vordefinierte chemische Zusammensetzung erhalten, welche ebenfalls in den Medien-Parametersatz eingeht. Wenn zusätzlich die Zusammensetzung variiert wird, so kann für jede einzelne Zusammensetzung eine zugehörige minimale Gesamt-Medien-Menge ermittelt werden. Neben der Zusammensetzung des Prozessmediums haben auch zahlreiche andere Parameter Einfluss auf das Optimum, z.B. die Prozesstemperatur, die insbesondere Teil des in Schritt a) festgelegten Bearbeitungs-Parametersatzes ist.

Die Simulation kann vorteilhaft mit einem Teilschritt e₀) gestartet werden, bei welchem die Gesamt-Medien-Menge Null ist, so dass also die Simulation mit den vorgegebenen Bauteil- und Prozessparametern in Abwesenheit des Prozessmediums durchgeführt wird. Im Allgemeinen wird hier der vorgegebene Grenzwert für die ausgewählte Kenngröße nicht eingehalten werden, da sonst das Prozessmedium gar nicht benötigt würde. Ausgehend von diesem Simulationsschritt e₀) kann die Gesamt-Medien-Menge dann inkrementell erhöht werden, bis der Grenzwert zum ersten Mal eingehalten wird. Bei dieser Methode hängt der genaue Wert des erhaltenen Optimums von der gewählten Schrittweite in der Erhöhung der Gesamt-Medien-Menge ab. Um das Ergebnis zu verfeinern, kann nach der Ermittlung eines ersten (groben) Optimierungsergebnisses eine weitere Optimierung erfolgen, indem die Schrittweite in der Umgebung des ersten Ergebnisses verringert wird und dort noch weitere inkrementelle Simulationsschritte durchgeführt werden, bis ein ausreichend genauer Wert für die optimale Gesamt-Medien-Menge ermittelt wurde.

Neben der Gesamt-Medien-Menge kann der Medien-Parametersatz vorteilhaft auch weitere Parameter enthalten, welche optional innerhalb von Schritt e) mittels der Simulation optimiert werden können. So kann insbesondere ein optimiertes Profil für einen zeitlich variablen Medien-Zufluss ermittelt werden. Alternativ oder zusätzlich kann ein optimiertes Profil für einen räumlich variablen Medien-Zufluss in unterschiedliche Bereiche der Vorrichtung ermittelt werden. Auch die Temperatur des eingesetzten Prozessmediums, die Standzeit des Prozessmediums und/oder die Anzahl der Prozesszyklen bis zu einem Austausch des Prozessmediums können hier mithilfe der Simulation optimiert werden.

Gemäß einer zweiten vorteilhaften Ausführungsform für den Schritt e) kann der hier bestimmte optimierte Medien-Parametersatz eine optimierte Medien-Zusammensetzung als Parameter aufweisen, wobei die optimierte Medien-Zusammensetzung derart aus einer Auswahl von zur Verfügung stehenden Materialkomponenten zusammengesetzt wird, dass der Bearbeitungsprozess im Hinblick auf wenigstens ein vorbestimmtes Kriterium optimiert wird. Besonders vorteilhaft kann diese Optimierung der Medien-Zusammensetzung mit der vorab beschriebenen Optimierung der Gesamt-Medien-Menge (und optionaler weiterer Parameter) kombiniert werden, so dass insgesamt ein optimierter Medien-Parametersatz bestimmt wird, bei dem sowohl die Menge als auch die Zusammensetzung durch die Simulation optimiert sind.

Das vorbestimmte Optimierungskriterium für die Optimierung der Medien-Zusammensetzung kann beispielsweise eine möglichst geringe notwendige Medien-Menge, ein möglichst geringer Preis für die notwendige Medien-Menge und/oder eine möglichst geringe Umweltbelastung bzw. Gesundheitsgefährdung aufgrund der notwendigen Medien-Menge sein. Optional kann auch eine multikriterielle Optimierung bezüglich mehrerer solcher Kriterien erfolgen, wobei ggf. eine Gewichtung der relevanten Kriterien in einer übergeordneten Kostenfunktion festgelegt wird.

Gemäß einer ersten Ausführungsvariante für den Schritt d) kann der dort festgelegte wenigstens eine Grenzwert ein Maximalwert sein, wobei die ausgewählte Kenngröße ein Maß für eine Beanspruchung des Bauteils ist. Alternativ oder zusätzlich kann hier aber auch eine maximale Beanspruchung des Prozesswerkzeugs der Prozessvorrichtung und/oder des Prozessmediums festgelegt werden. Mit anderen Worten ist der wenigstens eine Grenzwert dann eine einzuhaltende Maximalbeanspruchung des Bauteils, des Werkzeugs und/oder des Prozessmediums bei dem Bearbeitungsprozess. Beispielsweise kann es sich bei der entsprechenden Beanspruchung um eine Temperaturbelastung während des Prozesses, eine mechanische Krafteinwirkung, eine chemische Veränderung und/oder eine Konzentration eines einwirkenden Stoffes handeln. Derartige Beanspruchungen können durch den Einsatz geeigneter Prozessmedien verringert werden, so dass durch die Festlegung eines Grenzwertes für die Beanspruchung die Lage des in Schritt e) ermittelten Optimums beeinflusst wird. So wird z.B. mehr Kühlmittel benötigt, wenn der Grenzwert für die Temperaturbeanspruchung niedrig ist, oder es wird mehr Inertgas benötigt, wenn der Grenzwert für den zulässigen Rest-Sauerstoff niedrig ist. Allgemein vorteilhaft kann der Grenzwert für die Beanspruchung so festgelegt werden, dass ein sinnvoller Sicherheitsabstand zu einer bekannten (z.B. thermischen, mechanischen oder chemischen) Schädigungsschwelle des Bauteils (bzw. des Werkzeugs und/oder des Prozessmediums) eingehalten wird. Durch geeignete Wahl dieses Sicherheitsabstandes kann einerseits eine Schädigung zuverlässig verhindert werden und andererseits ein zu großer Überschuss des eingesetzten Prozessmediums vermieden werden.

Gemäß einer alternativen, zweiten Ausführungsvariante für den Schritt d) kann der dort festgelegte wenigstens eine Grenzwert ebenfalls ein Maximalwert sein, wobei die ausgewählte Kenngröße eine Verunreinigung des Bauteils und/oder eine Verunreinigung eines Prozesswerkzeugs und/oder eine Verunreinigung des eingesetzten Prozessmediums ist. Eine solche Kenngröße für die Verunreinigung kann beispielsweise als Konzentration oder Stoffmenge oder Bedeckungsgrad eines unerwünschten Stoffs oder einer unerwünschten Stoffklasse angegeben werden. Auf diese Weise wird mit dem Grenzwert eine maximal zulässige Obergrenze für den Restwert einer Verunreinigung festgelegt, welche z.B. nach einem Reinigungsschritt mit dem Prozessmedium verbleiben darf. Auch hier kann durch die Simulation erreicht werden, dass insbesondere eine Reinigung mit dem Prozessmedium als Reinigungsmittel das Prozessziel zuverlässig erreicht, ohne dass dabei ein Überschuss an Reinigungsmittel eingesetzt werden muss. Optional kann bei der Simulation in Schritt e) zusätzlich der Ort der Einwirkung des Reinigungsmittels variiert werden, so dass die Medien-Parameter des Reinigungsmittels nicht nur in Bezug auf die Menge, sondern auch in Bezug auf die räumliche Verteilung optimiert werden. Mit anderen Worten wird dann insgesamt nicht mehr Reinigungsmittel als nötig eingesetzt und es wird nur an den Stellen eingesetzt, an denen tatsächlich eine Verunreinigung vorliegt. Die bauteil-spezifische Information über das Vorliegen von Verunreinigungen an bestimmten Stellen ist dann Teil des in Schritt a) festgelegten Bauteil-Parametersatzes.

Gemäß einer vorteilhaften Ausführungsform für Schritt a) kann der hier festgelegte Bauteil-Parametersatz sowohl geometrische Parameter des Bauteils als auch ein oder mehrere Material-Parameter des Bauteils enthalten. So kann hier beispielsweise eine Begrenzungsfläche des Bauteils in kartesischen oder anderen Koordinaten festgelegt sein, wodurch Form und Größe des Bauteils definiert sind. Hier können auch mehrere geometrische Datensätze festgelegt werden, beispielsweise ein Datensatz für die Geometrie vor der Bearbeitung des Bauteils und ein Datensatz für die Geometrie nach der Bearbeitung, optional mit entsprechenden Datensätzen für Zwischen-Geometrien während des Prozesses. Außerdem kann beispielsweise die Materialzusammensetzung des von dem Bauteil ausgefüllten Volumens festgelegt sein, wobei diese Zusammensetzung entweder über das Volumen konstant oder variabel sein kann. Optional können als Teil der Material-Parameter auch zusätzliche Informationen über die Oberflächenbeschaffenheit wie z.B. Rauigkeit, Benetzungseigenschaften und/oder Reaktionsfähigkeit vorliegen. Aus der Kombination der geometrischen Parameter und der Material-Parameter kann dann insbesondere in Schritt d) ein bauteilspezifischer Grenzwert für die ausgewählte Kenngröße festgelegt werden. So kann allgemein vorteilhaft die Festlegung einer zulässigen Maximalbeanspruchung des Bauteils von den jeweiligen Bauteil-Parametern abhängig sein. Wenn gemäß dieser Ausführungsform auch der festgelegte Grenzwert von dem Bauteil-Parametersatz abhängig ist, kann eine noch genauere bauteilspezifische Optimierung der Medien-Parameter für den Bearbeitungsprozess erfolgen.

Allgemein vorteilhaft kann der in Schritt b) festgelegte Bearbeitungs-Parametersatz die Auswahl eines Werkzeugs in der Prozessvorrichtung, eine Vorschubgeschwindigkeit des Bauteils relativ zu einem solchen Werkzeug, eine Andruckkraft eines solchen Werkzeugs auf das Bauteil, eine Orientierung des Werkzeugs bezüglich des Bauteils, eine Werkzeugbahn, eine Verweildauer des Bauteils in der Prozessvorrichtung, eine Umgebungstemperatur, eine Prozesstemperatur und/oder ein Bearbeitungsvolumen pro Zeit umfassen. Dies sind typische Parameter von Bearbeitungsprozessen in industriellen Fertigungsanlagen, welche einen wesentlichen Einfluss auf die optimale Zusammensetzung und die benötigte Menge der typischerweise zum Einsatz kommenden Prozessmedien haben. Die oben genannte Werkzeugbahn kann insbesondere eine komplexe Werkzeugbahn sein, welche über einen NC-Code (NC für "Numerical Control") für das sogenannte Computer-Aided-Manufacturing (CAM) bereitgestellt wird. Eine solche Werkzeugbahn kann beispielsweise mit G-Code programmiert sein, also in der üblichen Maschinensprache zur Programmierung von CNC-Maschinen. Auch eine mechanische oder thermische Belastbarkeit des Werkzeugs, eine erlaubte Verunreinigung und/oder Materialveränderung des Werkzeugs können in diesem Parametersatz mit angegeben werden. Dabei erfolgt die Festlegung der zulässigen Grenzwerte für den Prozess allerdings zweckmäßig innerhalb Schritt d) als Teil der Grenzwerte für die ausgewählte(n) Kenngröße(n).

Gemäß einer besonders bevorzugten Ausführungsform des Verfahrens kann der gesamte Schritt e) mehrfach durchgeführt werden, wobei insbesondere der Bauteil-Parametersatz und/oder der Bearbeitungs-Parametersatz von Durchlauf zu Durchlauf variiert werden. Dadurch wird insgesamt ein optimiertes Parameterfeld erstellt, welches eine Mehrzahl von optimierten Medien-Parametersätzen für jeweils unterschiedliche Bauteil-Parametersätze und/oder Bearbeitungs-Parametersätze aufweist. Mit anderen Worten wird die Optimierung des Medien-Parametersatzes nicht nur einmal durchgeführt, sondern mehrfach für unterschiedliche Bauteile und/oder unterschiedliche Bearbeitungsprozesse. Insbesondere kann so ein bauteilspezifisches bzw. prozessspezifisches Parameterfeld erstellt werden, bei dem die einzusetzende Medien-Menge und/oder -Zusammensetzung von den Eigenschaften des zu bearbeitenden Bauteils und dem gewählten Bearbeitungsprozess abhängt. Besonders vorteilhaft kann bei dieser Ausführungsform das optimierte Parameterfeld in Schritt f) zur Einstellung eines in dem automatisierten Bearbeitungsprozess verwendeten Medien-Parametersatzes mittels einer automatischen Steuereinrichtung verwendet werden. Beispielsweise kann ein solches optimiertes Parameterfeld in eine speicherprogrammierbare Steuerung (SPS) einer CNC-Werkzeugmaschine (CNC für "computerized numerical control") geladen werden, sodass eine bauteilspezifische automatische Prozesssteuerung zur Verfügung gestellt wird, welche abhängig von dem zu bearbeitenden Bauteil und dem durchzuführenden Bearbeitungsprozess einen mit Hilfe der vorgelagerten Simulation optimierten Medien-Parametersatz einstellt. Insbesondere muss dann nicht für jedes Bauteil und für jeden Bearbeitungsprozess eine neue Simulation durchgeführt werden, sondern das Parameterfeld kann einmal mit Hilfe einer vorgelagerten Simulationsabfolge erstellt werden, und die jeweils günstigen Medien-Parameter können dann mit Hilfe der Steuereinrichtung aus dem allgemeinen optimierten Parameterfeld abgeleitet werden. Alternativ ist es aber natürlich auch möglich, dass für jedes Bauteil und für jeden Bearbeitungsprozess eine eigene Simulation durchgeführt wird, um einen noch genauer optimierten Medien-Parametersatz zu erhalten.

Gemäß einer besonders vorteilhaften Ausführungsform des Bearbeitungsverfahrens kann dieses zusätzlich die folgenden Schritte umfassen:
h) Messung der ausgewählten Kenngröße mittels eines Sensors innerhalb der Prozessvorrichtung und
i) Regelung des verwendeten Medien-Parametersatzes in Abhängigkeit des in Schritt h) erhaltenen Messwerts mittels einer Regelungseinrichtung innerhalb der Prozessvorrichtung.

Die Messung der ausgewählten Kenngröße in Schritt h) kann dabei entweder direkt oder indirekt erfolgen, wobei unter einer indirekten Messung die Messung einer physikalischen Größe verstanden wird, welche mit der ausgewählten Kenngröße zusammenhängt. So kann der Sensor beispielsweise eine Wärmebildkamera sein, mit welcher eine thermische Belastung des Bauteils gemessen wird. Oder der Sensor kann ein Kraftsensor sein, mit welchem eine mechanische Belastung gemessen wird. Oder der Sensor kann eine optische Kamera sein, mit welcher eine Verformung gemessen wird oder eine Verunreinigung detektiert wird. Oder es kann sich um einen Gassensor handeln, mit welchem eine verbleibende Sauerstoffmenge gemessen wird. Allgemein vorteilhaft kann der Sensor dazu ausgebildet sein, einen Belastungszustand und/oder eine Verunreinigung des Bauteils zu detektieren.

Allgemein und unabhängig von der genauen Ausgestaltung des Sensors und der gemessenen Kenngröße wird der erhaltene Messwert in Schritt i) zur Regelung des im Bearbeitungsprozess verwendeten Medien-Parametersatzes verwendet. So kann insbesondere der in Schritt f) eingestellte und mittels Simulation optimierte Medien-Parametersatz durch eine solche Regelung noch weiter verfeinert werden. Ergibt z.B. die Messung, dass eine Bauteil-Beanspruchung weit unterhalb der zulässigen Belastungsgrenze liegt, so kann die Medien-Menge noch unter das aus der Simulation erhaltene Optimum reduziert werden. Wenn umgekehrt die Messung ergibt, dass ein vordefinierter Sicherheitsabstand zur Schädigungsgrenze nicht eingehalten wird, dann kann die Medien-Menge erhöht werden. Allgemein kann so der im Prozess eingesetzte Medien-Parametersatz ausgehend von dem berechneten Optimum durch eine in-situ-Messung noch weiter verfeinert werden.

Optional kann das Verfahren noch den folgenden zusätzlichen Schritt umfassen:
j) Rückspeisung des erhaltenen Messwerts in das in Schritt c) bereitgestellte Simulationsmodell und Anpassung des Simulationsmodells.

Insbesondere kann das Simulationsmodell auf diese Weise für einen nachfolgenden Durchlauf des Simulationsschritts e) weiter verbessert (adaptiert) werden. Dadurch können in nachfolgenden Durchläufen durch die Schritte f) und g) noch weiter optimierte Medien-Parametersätze für den Bearbeitungsprozess verwendet werden.

Auch die Vorrichtung kann vorteilhaft so ausgestaltet sein, dass sie zur Ausführung der optionalen Schritte h), i) und gegebenenfalls j) ausgelegt ist.

Nachfolgend wird die Erfindung anhand einiger bevorzugter Ausführungsbeispiele unter Bezugnahme auf die angehängten Zeichnungen beschrieben, in denen:
- Figur 1: eine schematische Darstellung einer Prozessvorrichtung nach einem Ausführungsbeispiel der Erfindung zeigt und
- Figuren 2 bis 4: Ablaufdiagramme für verschiedene Ausführungsbeispiele des Verfahrens zeigen.

In den Figuren sind gleiche oder funktionsgleiche Elemente mit gleichen Bezugszeichen versehen.

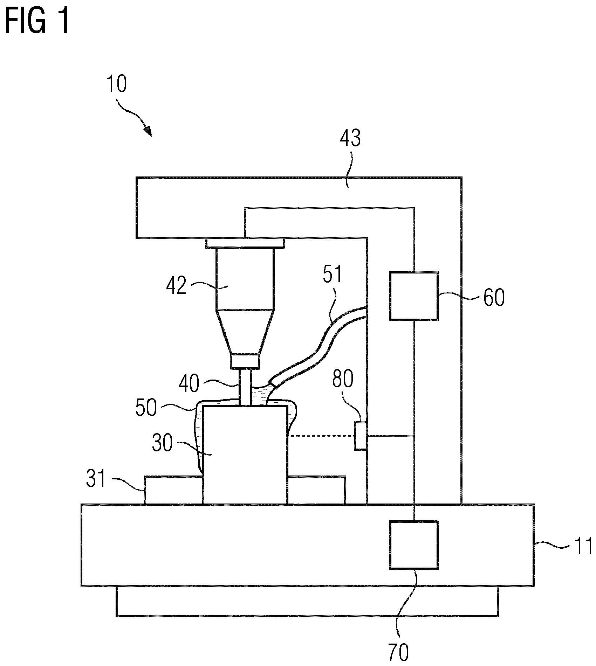

In Figur 1 ist eine schematische Darstellung einer Prozessvorrichtung 10 nach einem ersten Ausführungsbeispiel der Erfindung gezeigt. Gezeigt ist eine CNC-Werkzeugmaschine mit einer Bodenplatte 11 und einem zu bearbeitenden Bauteil 30, welches über eine Bauteilhalterung 31 an dieser fixiert ist. An einem Werkzeugarm 43 ist über eine Werkzeughalterung 42 ein Bearbeitungswerkzeug 40 angebracht. Dabei kann es sich beispielsweise um ein Fräswerkzeug handeln, so dass die Vorrichtung 10 insgesamt eine CNC-Fräsmaschine darstellt. Optional kann über eine hier nicht dargestellte Wechselvorrichtung auch ein automatischer Werkzeugwechsel vorgenommen werden, so dass verschiedene Bearbeitungswerkzeuge verwendet werden können. Die Prozessparameter der Vorrichtung 10 werden automatisiert durch eine automatische Steuereinrichtung 60 eingestellt, welche optional auch als Regeleinrichtung wirken kann. Es kann sich dabei beispielsweise um eine speicherprogrammierbare Steuerung (SPS) für eine CNC-Maschine handeln.

Alternativ kann die Steuer- und Regeleinrichtung 60 als Edge-Gerät realisiert sein.

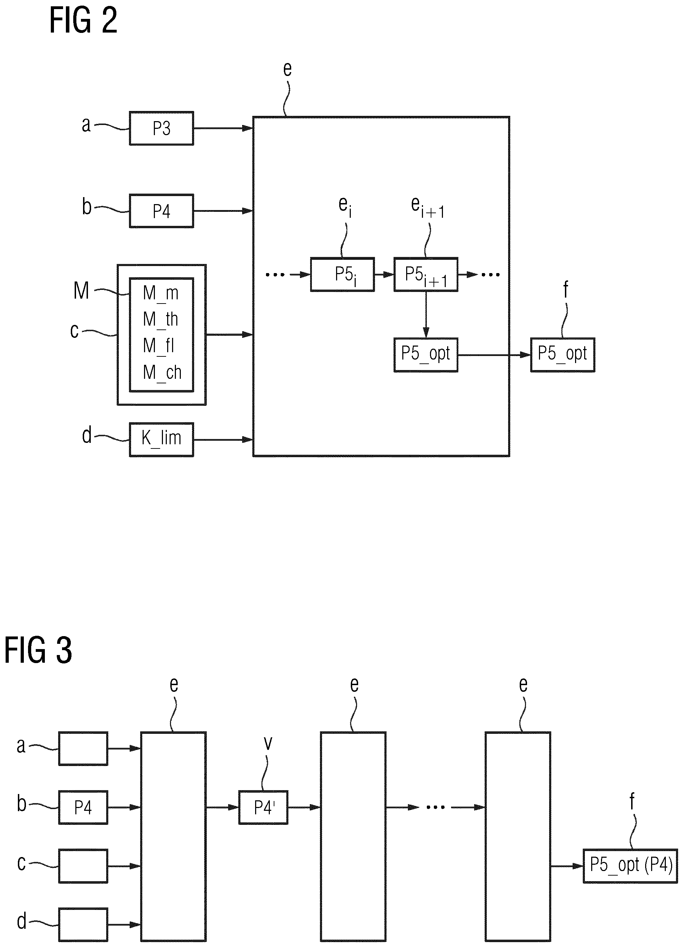

Während der Bearbeitung des Bauteils 30 wird dem Prozess über eine Medien-Zuführung 51 ein Prozessmedium 50 zugeführt. In diesem Beispiel handelt es sich um ein flüssiges Kühl-Schmier-Mittel, wie es in CNC-Werkzeugmaschinen häufig zum Einsatz kommt. Durch den Einsatz eines solchen Kühl-SchmierMittels wird der Fräsprozess unterstützt, wobei einerseits die Reibung reduziert wird und andererseits aufgrund der Kühlung übermäßige thermische Belastungen des Bauteils 30 und des Werkzeugs 40 verhindert werden. Durch den Einsatz eines solchen Kühlschmiermittels kommt es jedoch aufgrund schädlicher Materialkomponenten sowohl zu einer Umweltbelastung als auch zu einer potenziellen Gesundheitsgefährdung des mit der Vorrichtung in Berührung kommenden Personals. Um diese negativen Folgen zu verringern, kommt bei der erfindungsgemäßen Ausführung der Vorrichtung eine der Steuereinrichtung 60 vorgelagerte Simulationsvorrichtung 70 zum Einsatz, mit welcher ein optimierter Medien-Parametersatz bestimmt werden kann, welcher dann von der Steuereinrichtung 60 verwendet wird. Die vorgelagerte Simulationsvorrichtung 70 kann, wie hier angedeutet, in die Vorrichtung 10 integriert sein. Sie kann aber alternativ auch als separate Vorrichtung vorliegen, beispielsweise auf einem externen Computer, welcher dann der Steuereinrichtung 60 die optimierten Parameter über eine Schnittstelle zur Verfügung stellt, vorteilhaft über eine drahtlose Kommunikationsschnittstelle. Der Ablauf des Verfahrens zur Parameterermittlung innerhalb der Simulationsvorrichtung wird im Zusammenhang mit den Figuren 2 bis 4 näher beschrieben.

Mit einem optional vorhandenen und hier nur schematisch dargestellten Sensor 80 kann der Bearbeitungsprozess überwacht werden. Insbesondere kann hiermit eine Kenngröße überwacht werden, für die beim Prozess ein vorgegebener Grenzwert eingehalten werden muss. Beispielsweise kann hier über einen Temperatursensor die Temperatur des Bauteils 30 während des Bearbeitungsprozesses überwacht werden. Der mit dem Sensor 80 erhaltene Messwert kann einerseits dazu verwendet werden, über die Steuer- und Regelungseinrichtung 60 die mit der Simulationsvorrichtung ermittelten Medien-Parameter nachzuregeln, also beispielsweise die Medien-Menge zu erhöhen, wenn das Bauteil 30 beim Prozess heißer wird als von der Simulation vorhergesagt wurde. Andererseits kann der mit dem Sensor 80 erhaltene Messwert auch dazu verwendet werden, das von der Simulationsvorrichtung 70 verwendete Simulationsmodell anzupassen, wenn der Messwert von dem vorhergesagten Wert abweicht.

In Figur 2 ist ein Ablaufdiagramm für ein erstes Ausführungsbeispiel des erfindungsgemäßen Verfahrens zur Ermittlung von Prozessparametern für eine Prozessvorrichtung gezeigt, wobei die Prozessvorrichtung beispielsweise die in Figur 1 gezeigte Werkzeugmaschine 10 sein kann. Das grundlegende Verfahren kann aber auch auf beliebige andere Beispiele von Prozessvorrichtungen angewendet werden, in denen Prozessmedien eingesetzt werden.

So wird in einem Schritt a) ein Bauteil-Parametersatz P3 für das zu bearbeitende Bauteil 30 festgelegt. Dieser Parametersatz P3 kann beispielsweise geometrische Parameter des Bauteils und Material-Parameter des Bauteils umfassen.

In einem Schritt b) wird ein Bearbeitungs-Parametersatz P4 für den durchzuführenden Bearbeitungsprozess festgelegt, welcher beispielsweise die Eigenschaften des ausgewählten Werkzeugs 40, eine Umgebungstemperatur, einen Werkzeugpfad, eine Andruckkraft und/oder weitere werkzeug- und prozessspezifische Parameter umfassen kann.

In einem Schritt c) wird ein Simulationsmodell M bereitgestellt, wobei es sich insbesondere um ein multiphysikalisches Modell handeln kann. Im konkreten Beispiel der Figur 2 umfasst das Modell M sowohl eine Modellkomponente für strukturelle Mechanik M_m als auch eine thermische Modellkomponente M_th, eine fluiddynamische Modellkomponente M_fl und eine chemische Modellkomponente M_ch. Optional kann auch eine hier nicht dargestellte elektrische und/oder elektrochemische Modellkomponente zum Einsatz kommen. Es sind auch nicht alle hier gezeigten Modellkomponenten nötig. Es ist allerdings vorteilhaft, wenn neben der Modellkomponente für strukturelle Mechanik Mm zumindest eine weitere Modellkomponente vorhanden ist, um thermische, fluiddynamische, chemische und/oder elektrische Wechselwirkungen zwischen dem Prozessmedium 50 und dem Bauteil 30 und/oder dem Prozesswerkzeug 40 zu beschreiben.

In einem Schritt d) wird wenigstens ein Grenzwert K lim für wenigstens eine ausgewählte Kenngröße K festgelegt. Dabei kann es sich beispielsweise um eine Belastungsgrenze des Bauteils 30 und/oder des Bearbeitungswerkzeugs 40 und/oder des Prozessmediums 50 handeln. Beispielsweise kann die Belastungsgrenze eine thermische Belastungsgrenze sein. Es kann sich aber auch um eine mechanische Belastungsgrenze, eine maximale Verunreinigung oder eine maximale chemische Materialveränderung handeln.

Die Reihenfolge dieser Schritte a) bis d) kann prinzipiell beliebig sein. Im Anschluss an diese vier Schritte erfolgt zweckmäßig der Schritt e), bei dem der Bearbeitungsprozess unter Verwendung des Simulationsmodells M sowie der Parametersätze P3, P4 simuliert wird. Die Simulation erfolgt in mehreren Teilschritten eᵢ), wobei diese Teilschritte eᵢ) iterativ und/oder parallel zueinander ablaufen können. Nur beispielhaft ist hier eine iterative Abfolge gezeigt, bei der auf einen Teilschritt eᵢ) ein Teilschritt eᵢ₊₁) folgt. Durch die Punkte ist angedeutet, dass davor und danach weitere derartige Teilschritte ablaufen können. Bei den einzelnen Teilschritten werden jeweils unterschiedliche Medien-Parametersätze P5 gewählt, so dass beispielsweise P5ᵢ den Medien-Parametersatz in Schritt eᵢ) und P5ᵢ₊₁ den Medien-Parametersatz in Schritt eᵢ₊₁) darstellt. Die einzelnen Medien-Parametersätze können beispielsweise eine Gesamt-Medien-Menge und/oder eine Medien-Zusammensetzung als Einzelparameter umfassen. Optional können auch weitere Parameter wie beispielsweise eine zeitlich variable Zufuhrmenge oder eine räumlich variable Zufuhrmenge des Prozessmediums als Parameter enthalten sein und entsprechend von Teilschritt zu Teilschritt variiert werden.

Allgemein wird in jedem Teilschritt eᵢ) mithilfe des Simulationsmodells M für die jeweils festgelegten Parameter P3, P4, P5 ein Vorhersagewert für die wenigstens eine Kenngröße K ermittelt und mit dem festgelegten Grenzwert K_lim verglichen. Auf diese Weise wird ein optimierter Medien-Parametersatz P5_opt ermittelt, bei welchem der Grenzwert K_lim für die ausgewählte Kenngröße K eingehalten wird, insbesondere bei welchem er gerade noch eingehalten wird. Wenn das Einhalten des Grenzwerts K lim für mehrere Medien-Parametersätze möglich ist, dann wird insbesondere das Optimum so ermittelt, dass dabei eine übergeordnete Kostenfunktion optimiert wird. Dies kann beispielsweise eine Kostenfunktion sein, welche ein Kriterium für die Wirtschaftlichkeit des Prozesses und/oder ein Kriterium für die Umweltbelastung durch den Prozess und/oder ein Kriterium für eine Gesundheitsgefährdung durch den Prozess enthält.

In dem darauffolgenden Schritt f) wird der mit der Simulation e) erhaltene optimierte Medien-Parametersatz P5_opt in der Prozessvorrichtung 10 für die Durchführung des Bearbeitungsprozesses eingestellt. Insbesondere kann der optimierte Medien-Parametersatz P5_opt an die Steuer- und Regeleinrichtung 60 weitergegeben werden und dort für die Durchführung des Bearbeitungsprozesses eingestellt werden. Auf diese Weise wird erreicht, dass die Medien-Parameter auf den wenigstens einen vordefinierten Grenzwert K_lim angepasst sind und kein übermäßiger Medien-Überschuss eingesetzt wird. Insbesondere ist das berechnete Optimum P5_opt abhängig vom konkret zu bearbeitenden Bauteil und vom konkret gewählten Bearbeitungsprozess. Hierdurch kann eine erhebliche Verringerung von Umweltbelastungen und Gesundheitsgefährdungen erreicht werden.

In Figur 3 ist ein Ablaufdiagramm für ein zweites Ausführungsbeispiel des erfindungsgemäßen Verfahrens gezeigt. Die Schritte a) bis d) sind ähnlich ausgestaltet wie in Figur 2 und sind daher nur grob skizziert. Im Anschluss daran findet ein erster Durchlauf durch einen Simulationsschritt e) statt, welcher ebenfalls ähnlich wie in Figur 2 ausgestaltet ist. Im Unterschied zum ersten Verfahrensbeispiel wird hier aber in einem darauffolgenden Schritt v) der Bearbeitungs-Parametersatz verändert, und der entsprechende geänderte Bearbeitungs-Parametersatz P4' wird in einem folgenden Durchlauf durch den Simulationsschritt e) verwendet. Dies wird noch einige Male wiederholt, wodurch insgesamt ein optimiertes Parameterfeld P5_opt(P4) erhalten wird, also eine Mehrzahl von optimierten Medien-Parametersätzen P5_opt als Funktion des Bearbeitungs-Parametersatzes P4. Dieses optimierte Parameterfeld wird dann ebenfalls in einem nachfolgenden Schritt f) für den Bearbeitungsprozess verwendet. Insbesondere kann das gesamte Parameterfeld P5_opt(P4) an die Steuerungs- und Regeleinrichtung 60 übergeben werden. Dort kann das Parameterfeld beispielsweise dazu verwendet werden, abhängig von einem benutzerdefinierten Bearbeitungsprozess den optimierten Medien-Parametersatz P5_opt zu bestimmen und zu verwenden. Alternativ kann die Steuereinrichtung 50 auch automatisch ein übergeordnetes Optimum bestimmen, bei dem für ein zu erreichendes Prozessziel sowohl optimierte Medienparameter P5_opt als auch optimierte Bearbeitungs-Parameter P4_opt ausgegeben und voreingestellt werden.

Figur 3 zeigt, wie die optimierten Medien-Parametersätze P5_opt in Form eines Parameterfeldes für verschiedene Bearbeitungs-Parametersätze P4 bestimmt werden können. Alternativ oder zusätzlich können solche optimierten Medien-Parametersätze P5_opt auch in analoger Weise für unterschiedliche Bauteil-Parametersätze P3 ermittelt werden, so dass von der Simulationsvorrichtung 70 insgesamt ein mehrdimensionales optimiertes Parameterfeld an die Steuereinrichtung 60 übergeben wird. Besonders vorteilhaft kann auf Grundlage dieses Parameterfeldes ein automatisierter NC-Code für die Steuereinrichtung erstellt werden.

Die beschriebene Erstellung eines solchen mehrdimensionalen Parameterfeldes kann allgemein in einer separaten Simulations-Vorrichtung durchgeführt werden, welche der eigentlichen Prozessvorrichtung (also beispielsweise einer CNC-Maschine) vorgelagert ist. Alternativ ist es aber auch möglich, die Simulationsvorrichtung in die Prozessvorrichtung zu integrieren, beispielsweise innerhalb eines Edge-Gerätes.

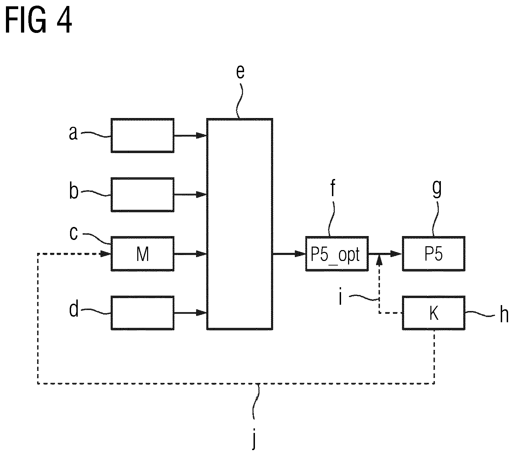

In Figur 4 ist ein Ablaufdiagramm für ein drittes Ausführungsbeispiel des erfindungsgemäßen Verfahrens gezeigt. Die Schritte a) bis f) sind ähnlich ausgestaltet wie in Figur 2 und sind daher nur grob skizziert. Im Anschluss an Schritt f) folgt hier ein Schritt g), bei welchem die Bearbeitung des Bauteils 30 innerhalb der Prozessvorrichtung 10 ausgeführt wird. Optional kann während dieses Bearbeitungsschritts in einem parallelen Schritt h) eine Messung der wenigstens einen Kenngröße K erfolgen. Dies kann beispielsweise über den Sensor 80 (Figur 1) erfolgen, welcher eine (direkte oder indirekte) Messung eines Belastungszustands oder einer Verunreinigung ermöglicht. Es kann sich dabei grundsätzlich um einen Belastungszustand und/oder eine Verunreinigung des Bauteils 30, des Werkzeugs 40 oder des Prozessmediums 50 handeln. In jedem Fall wird so eine Überwachung und Kontrolle des Simulationsergebnisses ermöglicht. Optional kann in einem Schritt i) in Abhängigkeit von dem Messergebnis eine Nachregelung des aus der Simulation erhaltenen optimierten Medien-Parametersatzes P5 erfolgen. So kann eine noch weiter verbesserte Regelung des Medien-Einsatzes erreicht werden. Alternativ oder zusätzlich kann in einem weiteren optionalen Schritt j) eine Rückspeisung des Messergebnisses in das Simulationsmodell M und eine entsprechende Anpassung des Simulationsmodells M erfolgen. So wird erreicht, dass bei einem nachfolgenden Durchlauf durch den Simulationsschritt e) ein noch besserer optimierter Medien-Parametersatz P5_opt erhalten wird.

### Bezugszeichenliste

- 10: Prozessvorrichtung (Werkzeugmaschine)
- 11: Bodenplatte
- 30: Bauteil
- 31: Bauteilhalterung
- 40: Bearbeitungswerkzeug (Fräswerkzeug)
- 42: Werkzeughalterung
- 43: Werkzeugarm
- 50: Prozessmedium
- 51: Medien-Zuführung
- 60: Steuereinrichtung (opt. auch Regeleinrichtung)
- 70: Simulationsvorrichtung
- 80: Sensor
- a: Festlegen von P3
- b: Festlegen von P4
- c: Bereitstellen von M
- d: Festlegen von K_lim
- e: Simulation
- eᵢ: Teilschritt der Simulation
- eᵢ₊₁: nachfolgender Teilschritt der Simulation
- f: Einstellung von P5_opt
- g: Bearbeitung des Bauteils
- h: Messung von K
- i: Regelung von P5
- j: Rückspeisung der Messung in M
- K: ausgewählte Kenngröße
- K_lim: Grenzwert für ausgewählte Kenngröße
- P3: Bauteil-Parametersatz
- P4: Bearbeitungs-Parametersatz
- P4': geänderter Bearbeitungs-Parametersatz
- P5: Medien-Parametersatz
- P5ᵢ: Medien-Parametersatz in Schritt eᵢ
- P5ᵢ₊₁: Medien-Parametersatz in Schritt eᵢ₊₁
- P5_opt: optimierter Medien-Parametersatz
- P5_opt(P4): Parameterfeld P5_opt als Funktion von P4
- M: multiphysikalisches Simulationsmodell
- M_m: Modellkomponente für strukturelle Mechanik
- M_th: thermische Modellkomponente
- M_fl: fluiddynamische Modellkomponente
- M_ch: chemische Modellkomponente
- v: Variation von P4

## Patentansprüche

1. Verfahren zur Ermittlung von Prozessparametern (P4, P5) einer Prozessvorrichtung (10),
- wobei die Prozessvorrichtung (10) für einen automatisierten Bearbeitungsprozess an einem Bauteil (30) ausgelegt ist, bei welchem wenigstens ein Prozessmedium (50) eingesetzt wird,
- wobei das Verfahren die folgenden Schritte umfasst:
a) Festlegen eines Bauteil-Parametersatzes (P3) für das zu bearbeitende Bauteil (30)
b) Festlegen eines Bearbeitungs-Parametersatzes (P4) für den durchzuführenden Bearbeitungsprozess,
c) Bereitstellen eines Simulationsmodells (M) für den Bearbeitungsprozess, welches wenigstens eine Kenngröße (K) des Bearbeitungsprozesses in Abhängigkeit von dem Bauteil-Parametersatz (P3), dem Bearbeitungs-Parametersatz (P4) und einem variablen Medien-Parametersatz (P5) für das einzusetzende Prozessmedium (50) beschreibt,
d) Festlegen eines bei dem Bearbeitungsprozess einzuhaltenden Grenzwerts (K_lim) für eine ausgewählte Kenngröße (K),
e) Simulation des Bearbeitungsprozesses unter Verwendung des Simulationsmodells (M) in mehreren Teilschritten eᵢ),
- wobei bei den einzelnen Teilschritten eᵢ) jeweils unterschiedliche Medien-Parametersätze (P5) gewählt werden,
- wodurch insgesamt ein optimierter Medien-Parametersatz (P5_opt) ermittelt wird, bei welchem der Grenzwert (K lim) für die ausgewählte Kenngröße (K) eingehalten wird,
f) Einstellung des optimierten Medien-Parametersatzes (P5_opt) für die Durchführung des automatisierten Bearbeitungsprozesses in der Prozessvorrichtung (10).

2. Verfahren nach Anspruch 1, bei welchem das Prozessmedium (50) ein Kühlmittel, ein Schmiermittel, ein Inertisierungsmittel, ein Prozessgas, eine Prozessflüssigkeit, ein Reinigungsmittel und/oder ein Transportmittel ist.

3. Verfahren nach einem der Ansprüche 1 oder 2, bei welchem das in Schritt c) bereitgestellte Simulationsmodell (M) ein multiphysikalisches Simulationsmodell ist, welches Phänomene der strukturellen Mechanik und zusätzlich thermische, fluiddynamische, chemische und/oder elektrische Phänomene beschreibt.

4. Verfahren nach einem der vorhergehenden Ansprüche, bei welchem der in Schritt e) bestimmte optimierte Medien-Parametersatz (P5_opt) eine optimierte Gesamt-Medien-Menge als Parameter aufweist,
wobei als optimierte Gesamt-Medien-Menge die minimale Medien-Menge bestimmt wird, bei welcher der festgelegte Grenzwert (K_lim) für die ausgewählte Kenngröße (K) eingehalten wird.

5. Verfahren nach einem der vorhergehenden Ansprüche, bei welchem der in Schritt e) bestimmte optimierte Medien-Parametersatz (P5_opt) eine optimierte Medien-Zusammensetzung als Parameter aufweist, wobei die optimierte Medien-Zusammensetzung derart aus einer Auswahl von zur Verfügung stehenden Materialkomponenten zusammengesetzt wird, dass der Bearbeitungsprozess im Hinblick auf wenigstens ein vorbestimmtes Kriterium optimiert wird.

6. Verfahren nach einem der Ansprüche 1 bis 5, bei welchem der in Schritt d) festgelegte Grenzwert (K lim) ein Maximalwert ist, wobei die ausgewählte Kenngröße (K) ein Maß für eine Beanspruchung des Bauteils (30) oder eines Werkzeugs (40) der Prozessvorrichtung oder des Prozessmediums (50) ist, insbesondere eine Temperaturbelastung, eine mechanische Krafteinwirkung, eine chemische Veränderung und/oder eine Konzentration eines einwirkenden Stoffes ist.

7. Verfahren nach einem der Ansprüche 1 bis 5, bei welchem der in Schritt d) festgelegte Grenzwert (K_lim) ein Maximalwert ist, wobei die ausgewählte Kenngröße eine Verunreinigung des Bauteils (30) oder eine Verunreinigung eines Prozesswerkzeugs (40) der Prozessvorrichtung oder eine Verunreinigung des eingesetzten Prozessmediums (50) ist.

8. Verfahren nach einem der vorhergehenden Ansprüche, bei welchem der in Schritt a) festgelegte Bauteil-Parametersatz (P3) sowohl geometrische Parameter des Bauteils (30) als auch Material-Parameter des Bauteils (30) enthält.

9. Verfahren nach einem der vorhergehenden Ansprüche, bei welchem der Bearbeitungs-Parametersatz (P4) die Auswahl eines Werkzeugs (40) in der Prozessvorrichtung, eine Vorschubgeschwindigkeit des Bauteils (30) relativ zu einem Werkzeug (40), eine Andruckkraft eines Werkzeugs (40) auf das Bauteil (30), eine Orientierung des Werkzeugs (40) bezüglich des Bauteils (30), eine Werkzeugbahn, eine Verweildauer des Bauteils (30) in der Prozessvorrichtung, eine Umgebungstemperatur, eine Prozesstemperatur und/oder ein Bearbeitungsvolumen pro Zeit umfasst.

10. Verfahren nach einem der vorhergehenden Ansprüche, bei welchem Schritt e) mehrfach durchgeführt wird,
- wobei von Durchlauf zu Durchlauf der Bauteil-Parametersatz (P3) und/oder der Bearbeitungs-Parametersatz (P4) variiert wird,
- so dass insgesamt ein optimiertes Parameterfeld (P5_opt(P4)) erstellt wird, welches eine Mehrzahl von optimierten Medien-Parametersätzen (P5_opt) für jeweils unterschiedliche Bauteil-Parametersätze (P3) und/oder Bearbeitungs-Parametersätze (P4) aufweist,
- wobei das optimierte Parameterfeld (P5_opt(P4)) in Schritt f) in einer automatischen Steuereinrichtung (60) hinterlegt wird und dort zur Einstellung eines Medien-Parametersatzes (P5_opt) für den automatisierten Bearbeitungsprozess verwendet wird.

11. Verfahren zur Bearbeitung eines Bauteils (30) in einer automatisierten Prozessvorrichtung (10),
bei welchem die Einstellung der Prozessparameter (P4, P5) mit einem Verfahren nach einem der Ansprüche 1 bis 10 erfolgt und anschließend der folgende Schritt erfolgt:
g) Bearbeitung des Bauteils (30) unter Verwendung des optimierten Medien-Parametersatzes (P5_opt).

12. Verfahren nach Anspruch 11,
welches zusätzlich die folgenden Schritte umfasst:
h) direkte oder indirekte Messung der ausgewählten Kenngröße (K) mittels eines Sensors (80) innerhalb der Prozessvorrichtung (10) und
i) Regelung des verwendeten Medien-Parametersatzes (P5) in Abhängigkeit des in Schritt h) erhaltenen Messwerts mittels einer Regelungseinrichtung (60) innerhalb der Prozessvorrichtung (10).

13. Verfahren nach einem der Ansprüche 11 oder 12, welches zusätzlich den folgenden Schritt umfasst:
j) Rückspeisung des erhaltenen Messwerts in das in Schritt c) bereitgestellte Simulationsmodell (M) und Anpassung des Simulationsmodells (M).

14. Computerprogrammprodukt, umfassend Befehle, wobei die Befehle bei der Ausführung des Computerprogrammprodukts auf einem Computer diesen dazu veranlassen, das Verfahren gemäß einem der vorhergehenden Ansprüche 1 bis 13 auszuführen.

15. Vorrichtung, umfassend eine Simulationsvorrichtung (70) und eine Prozessvorrichtung (10),
- wobei die Prozessvorrichtung (10) für einen automatisierten Bearbeitungsprozess an einem Bauteil (30) ausgelegt ist, bei welchem wenigstens ein Prozessmedium (50) eingesetzt wird,
- wobei die Simulationsvorrichtung (70) zur Ausführung der folgenden Schritte ausgelegt ist:
a) Festlegen eines Bauteil-Parametersatzes für das zu bearbeitende Bauteil,
b) Festlegen eines Bearbeitungs-Parametersatzes (P3) für den durchzuführenden Bearbeitungsprozess,
c) Bereitstellen eines Simulationsmodells (M) für den Bearbeitungsprozess, welches wenigstens eine Kenngröße (K) in Abhängigkeit von dem Bauteil-Parametersatz (P3), dem Bearbeitungs-Parametersatz (P4) und einem variablen Medien-Parametersatz (P5) für das einzusetzende Prozessmedium (50) beschreibt,
d) Festlegen eines bei dem Bearbeitungsprozess einzuhaltenden Grenzwerts (K_lim) für eine ausgewählte Kenngröße (K),
e) Simulation des Bearbeitungsprozesses unter Verwendung des Simulationsmodells (M) in mehreren Teilschritten ei),
- wobei bei den einzelnen Teilschritten eᵢ) jeweils unterschiedliche Medien-Parametersätze (P5) gewählt werden,
- wodurch insgesamt ein optimierter Medien-Parametersatz (P5_opt) ermittelt wird, bei welchem der Grenzwert (K_lim) für die ausgewählte Kenngröße (K) eingehalten wird,
- und wobei die Prozessvorrichtung (10) eine Steuereinrichtung (60) aufweist, welche zur Ausführung des folgenden Schritts ausgelegt ist:
f) Einstellung des optimierten Medien-Parametersatzes (P5_opt) für die Durchführung des automatisierten Bearbeitungsprozesses in der Prozessvorrichtung (10).
